# EUROPÄISCHE PATENTSCHRIFT

(11) **EP 1 308 078 B1**
(45) Veröffentlichungstag und Bekanntmachung des Hinweises auf die Patenterteilung: **22.11.2006**
(21) Anmeldenummer: 02021077.9
(22) Anmeldetag: 21.09.2002
(51) Int. Cl.: A01F 15/07

(54) **Rundballenpresse**
Rotobaler
Ramasseuse-presse à balle cylindrique

(30) Priorität: 30.10.2001 DE 10153539
(43) Veröffentlichungstag der Anmeldung: 07.05.2003
(73) Patentinhaber: DEERE & COMPANY, Moline, Illinois 61265-8098 (US)
(72) Erfinder: Viaud, Jean, 70100 Gray (FR); Lucand, Philippe, 70120 Melin (FR)
(74) Vertreter: Magin, Ludwig Bernhard

(56) Entgegenhaltungen:
- EP-A- 0 894 428
- DE-A- 19 851 470
- FR-A- 2 460 099
- US-A- 3 914 926
- US-A- 4 172 354
- US-A- 4 393 764
- US-A- 4 912 918

## Beschreibung

Die Erfindung betrifft eine Rundballenpresse nach dem Oberbegriff des Anspruchs 1 mit wenigstens einem flexiblen endlosen Pressmittel, das über ortsfeste und bewegliche Drehkörper geführt ist und einen Ballenpreßraum umfangsseitig im wesentlichen umgibt.

Das Buch FMO-141B Ausgabe D-00 zeigt auf Seite 153 eine Rundballenpresse mit festen Seitenwänden, zwischen denen sich ortsfeste und positionsveränderliche drehbare Rollen erstrecken, über die Riemen geführt werden können. Einige der Rollen sind in einem Träger aufgenommen, der vertikal schwenkbar ist. Die Riemen verlaufen auch über Rollen an einem Spannarm, der unter der Spannung einer Feder stets in eine die Riemen spannende Stellung gedrängt wird. Der Vorteil dieser Bauart liegt darin, daß der Träger mit den wenigen Rollen leicht ist und großer Stellkräfte nicht bedarf. Nachteilig ist jedoch, daß der Träger weit angehoben werden muß, damit der fertige Rundballen ausgeworfen werden kann, zumal im Bodenbereich ein zweiter Satz Riemen vorgesehen ist, auf dem der Rundballen während seiner Bildung ruht. Wenn der Rundballen ausgeworfen wird, läßt die Spannung in den Riemen nach, so daß die Ausrollbewegung des Rundballens nicht unterstützt werden kann.

Der Prospekt VERMEER 504 HE ohne Druckvermerk zeigt eine Rundballenpresse, bei der sich der Schwenkpunkt eines außerhalb des Ballenpreßraums verlaufenden Trägers nahezu im Zentrumsbereich des Ballenpreßraums befindet. An dem äußeren Endbereich des Trägers ist ein Arm vorgesehen, auf dem sich mehrere Rollen befinden, über die Riemen verlaufen und die in den Ballenpreßraum eintauchen können. In diesem Fall bildet die Spannvorrichtung mehrere Schlaufen, in denen sich Erntegut ansammeln kann.

Die DE-A1-198 51 470 offenbart eine Rundballenpresse mit nur einem einzigen Satz von Riemen, die über ortsfeste und positionsveränderliche Rollen in einem festen Gehäuse und einem schwenkbaren Gehäuseteil geführt sind. Es ist ebenfalls ein Spannarm vorgesehen, der die Riemen über zwei verstellbare Rollen führt. Der Nachteil dieser Bauart besteht in der gedrängten Bauweise, die sich aus der Verwendung zweier Spannrollen ergibt und zu mehreren Schlaufen des Preßmittels während des Preßbetriebs führt, in denen sich Preßgut ansammeln und zu Verstopfungen führen kann.

Aus der US-A-4 172 354 ist eine Rundballenpresse mit einem Träger und daran angebrachten Drehkörpern bekannt, die ebenfalls die obengenannten Nachteile aufweist.

Das der Erfindung zugrunde liegende Problem wird darin gesehen, eine kompakte Rundballenpresse mit einem Spannmechanismus vorzuschlagen, der das Preßmittel gespannt hält und Verstopfungen vermeidet.

Dieses Problem wird erfindungsgemäß durch die Lehre des Patentanspruchs 1 gelöst, wobei in den weiteren Patentansprüchen Merkmale aufgeführt sind, die die Lösung in vorteilhafter Weise weiterentwickeln.

Die Anordnung zweier benachbarter Drehkörper an dem Träger, zwischen denen sich das Pressmittel hindurch erstreckt, hat den Vorteil, daß das Pressmittel je nach der Stellung des Trägers einmal an dem einen Drehkörper und einmal an dem anderen Drehkörper anliegt. Auf diese Weise kann mittels des Trägers eine weitere Schlaufe gebildet werden, die das Preßmittel verkürzt und somit die Spannung aufrecht hält. Diese Schlaufe wird jedoch erst beim Anheben des Trägers gebildet und gibt somit während des Pressbetriebs keinen Anlaß zur Ansammlung von Preßgut. Das Pressmittel kann als ein Satz schmaler, paralleler Riemen, als ein Band oder als ein Stabkettenförderer ausgebildet sein. Die Drehkörper sind regelmäßig Rollen oder Walzen, es können insbesondere bei einem Stabkettenförderer auch Räder sein. Die Konstruktion des Trägers ist vielseitig denkbar, z. B. als ein flächiger Teil, als ein Fachwerk aus Rohren, als ein entsprechend gekrümmter Arm, oder dergleichen. Dieser Träger kann auch relativ massiv ausgebildet sein, da er sich außerhalb der Seitenwände des Ballenpreßraums erstreckt und bewegt. Da nur der Träger, dessen Rollen und die entsprechenden Riemenabschnitt zum Auswerfen des Ballens bewegt werden, hingegen nicht die Seitenwände, sind die Stellkräfte gering. Die Stellwege sind ebenfalls kurz, wenn der Träger mit seinen Drehkörpern und dem darüber verlaufenden Abschnitt des Pressmittels den Boden des Pressraums bildet und der Ballen bei einem geringen Hub des Trägers bereits auf den Boden fallen kann.

Eine Lagerung des Trägers wenigstens im Mittenbereich des Ballenpreßraums bewirkt anders als bei einer oberhalb von ihm vorgesehenen Lagerung eine schnelle Öffnung des Ballenpreßraums zum Auswerfen des Ballens, so daß der Pressbetrieb sehr schnell wieder aufgenommen werden kann. Der angehobene Träger berührt auch deshalb kaum den ausgeworfenen Ballen, weil aufgrund seiner zentrischen Lagerung die radiale Erstreckung wesentlich geringer ist als beim Stand der Technik.

Der Stellweg des Trägers wird nicht durch feste Drehkörper beeinträchtigt, die sich im Grenzbereich des Ballenpreßraums befinden, wenn diese festen Drehkörper sich in einem Bereich befinden, in den der Träger mit seinen Drehkörpern nur bedingt eindringt und wenn die Drehkörper zwischen sich Platz belassen, in den der Träger eintauchen kann. Mit drei Drehkörpern oberhalb des Ballenpreßraums kann das Pressmittel ausreichend Schlaufen bilden, um entsprechend gespannt zu werden.

Die Spannung in dem Pressmittel wird auf einfache Weise mit einem Arm aufgebaut, der einen Drehkörper trägt, um den das Pressmittel als Schlaufe geführt ist. Die Kraft zum Verstellen bzw. Halten des Arms kann von einer Feder, einem Hydraulikoder Pneumatikmotor oder dergleichen aufgebaut werden. Wenn sich der Arm und der auf ihm gelagerte Drehkörper oberhalb des Ballenpreßraums befindet, erhöht er nicht die Länge der Rundballenpresse, sondern allenfalls deren Höhe, was aber unbedenklich ist.

Dem einen Drehkörper auf dem Träger einerseits kann ein weiterer mit Versatz zugeordnet werden, mit dem verhindert wird, daß sich die Trume des Pressmittels berühren. Alternativ könnte auch ein Drehkörper größeren Durchmessers verwendet werden.

Eine dreieckige Ausbildung des Trägers gewährleistet eine stabile aber zugleich platzsparende Bauform. Die Ausbildung des einen Eckbereichs als Lager führt zu einer sicheren Einleitung der Kräfte.

Wenn der Träger zugleich die Seitenwand des Ballenpreßraums darstellt, erfolgt dadurch eine Teilreduktion. Die Festigkeit kann statt durch Rohre, Streben oder dergleichen durch Stege, Sicken, Umkantungen oder dergleichen erzielt werden. Die Stellung der Drehkörper zu der Seitenwand bzw. den Seitenwänden verändert sich nicht. Wenn zum Auswerfen des Rundballens die Drehkörper mit dem Träger und somit den Seitenwänden angehoben werden, wird außerhalb des Ballenpreßraums sich angesammeltes Preßgut aus der Rundballenpresse ausgeworfen.

Wenn ein weiterer schwenkbarer Träger vorgesehen ist, dessen Lage von der Spannung in dem Pressmittel und der angreifenden Kraft des Ballens bestimmt wird, können sich diese Drehkörper so einstellen, daß sich der Ballen an mehreren Drehkörpern abstützt und somit die Oberflächenpressung gering bleibt. Eine geringe Oberflächenpressung führt zu einem geringen Bewegungswiderstand und somit zu einem geringen Leistungsbedarf.

Wenn sich in dem Press- und in dem Entladebetrieb die beiden Drehkörper des Trägers, die eine Umlenkung des Preßmittels besorgen, den gleichen oder im wesentlichen den gleichen Abstand zu einem festen Drehkörper aufweisen, kann einmal eine maximale Verkürzung und ein andermal eine entsprechend maximale Verlängerung des Preßmittels bewirkt werden.

Wenn die Seitenwände gegenüber einem Fahrgestell der Rundballenpresse verstellbar sind, können sie zum Auswerfen des Rundballens voneinander beabstandet werden, sodaß die Reibkräfte auf diese entfallen und dieser leicht aus dem Ballenpreßraum austreten kann.

Drehkörper, die sich außerhalb des Ballenpreßraums erstrecken, also seitlich über diesen hinausragen, oder mindestens mit diesem abschließen und sich gegebenenfalls entlang der Endkanten der Seitenwände bewegen, lassen eine Bewegung der Seitenwände zu.

In der Zeichnung ist ein nachfolgend näher beschriebenes Ausführungsbeispiel der Erfindung dargestellt. Es zeigt:
- Fig. 1: eine erfindungsgemäße Rundballenpresse in einem leicht gefüllten Betriebszustand in Seitenansicht und schematischer Darstellung,
- Fig. 2: die Rundballenpresse nach Figur 1 in einem gefüllten Zustand, und
- Fig. 3: die Rundballenpresse nach Figur 1 während des Entladevorgangs.

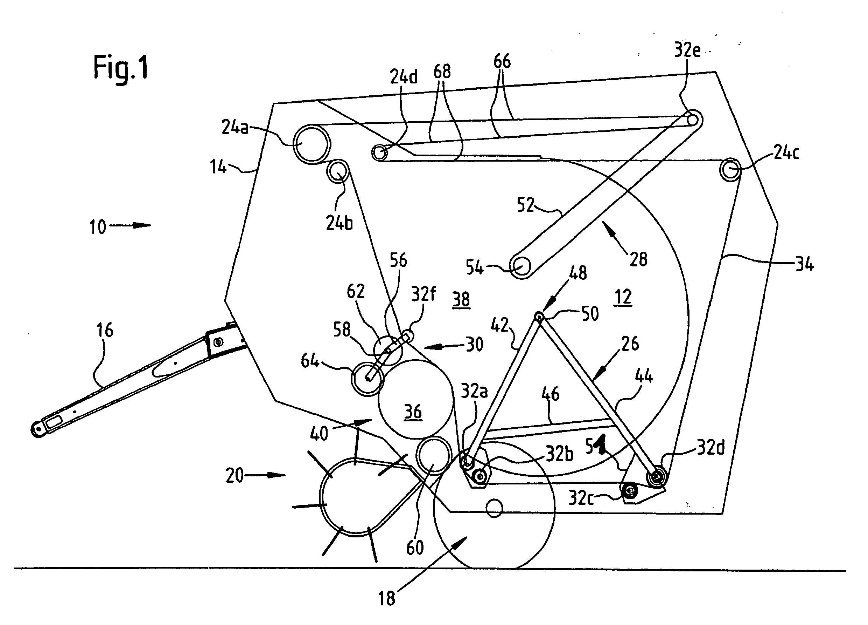

Figur 1 zeigt eine landwirtschaftliche Rundballenpresse 10 mit einem Ballenpreßraum 12. Die Rundballenpresse 10 weist unter anderem folgende Komponenten auf: ein Fahrgestell 14, eine Deichsel 16, ein Fahrwerk 18, eine Aufnahmevorrichtung 20, feste Drehkörper 24, einen Träger 26, einen Spannmechanismus 28, einen schwenkbaren Träger 30, ortsbewegliche Drehkörper 32 und ein Pressmittel 34.

Die Rundballenpresse 10 dient der Aufnahme von Erntegut, wie Stroh und Heu, das spiralförmig zu einem rund-zylindrischen Ballen 36 aufgerollt, gebunden und anschließend auf den Boden abgelegt wird. Während der Ballen 36 aus dem Ballenpreßraum 12 ausgeworfen wird, wird der Aufnahme- und Pressvorgang unterbrochen.

Der Ballenpreßraum 12 ist in seiner Größe veränderlich, d. h. sein Durchmesser nimmt mit der Größe des Ballens 36 zu. Während der Ballenpreßraum 12 umfangsseitig im wesentlichen von dem Pressmittel 34 umgeben wird, wird er seitlich von Seitenwänden 38 geschlossen. In einer nicht gezeigten Ausführungsform ist ein zweites Preßmittel unterhalb des Ballenpressraums vorgesehen, auf dem sich der Ballen 36 ganz oder teilweise abstützen kann.

Das Fahrgestell 14 ist in bekannter Weise als ein Schweißzusammenbau ausgebildet, der die Deichsel 16, das Fahrwerk 18, die Aufnahmevorrichtung 20, gegebenenfalls eine Schneidvorrichtung, die ortsfesten Drehkörper 24, den Träger 26, den Spannmechanismus 28, den schwenkbaren Träger 30 und die Seitenwände 38 zusammenhält bzw. trägt. Hierzu sind auch nicht gezeigte Querstreben vorgesehen, die für einen steifen räumlichen Zusammenbau sorgen. Der Aufbau des Fahrgestells 14 an sich ist herkömmlicher Natur.

Die Deichsel 16 dient dem Anschluß des Fahrgestells 14 an ein nicht gezeigtes Zugfahrzeug, z. B. einen Ackerschlepper.

Das Fahrwerk 18 enthält jeweils nicht gesondert bezeichnet eine Achse und Räder, mit denen sich das Fahrgestell 14 auf dem Boden abstützt. Das Fahrwerk 18 ist fest und gegebenenfalls gefedert mit dem Fahrgestell 14 verbunden.

Die Aufnahmevorrichtung 20 ist in herkömmlicher Weise als eine sogenannte Pick-Up ausgebildet, die auf dem Boden liegendes Gut mit umlaufenden Zinken aufnimmt und es rückwärts in Richtung des Ballenpreßraums 12 fördert.

Gegebenenfalls kann eine Schneidvorrichtung von ebenfalls bekannter Bauweise vorgesehen werden, die das Gut auf dem Weg zwischen der Aufnahmevorrichtung 20 und einem Einlass 40 in den Ballenpreßraum 12 zerkleinert. Allerdings ist eine solche Schneidvorrichtung nicht notwendiger Bestandteil der Rundballenpresse 10; vielmehr kann sie auch vollkommen entfallen, sodaß die Aufnahmevorrichtung 20 das Gut unmittelbar in den Ballenpreßraum 12 fördert.

Die ortsfesten Drehkörper 24 sind als Rollen oder Walzen aus Stahl und erforderlichenfalls beschichtet mit Kunststoff ausgebildet. Die Drehkörper 24 sind entweder auf einer Achse drehbar gelagert oder weisen Wellenstummel auf, die in Lagern in dem Fahrgestell 14 drehbar aufgenommen werden. Die Drehkörper 24 sind von unterschiedlichem Durchmesser und weisen gegebenenfalls Leitmittel für das Preßmittel 34, wie Stege, Erhebungen und dergleichen auf. In diesem speziellen Ausführungsbeispiel sind insgesamt vier ortsfest Drehkörper 24 vorgesehen, nämlich vorne oben, vorne unten, hinten oben und dazwischen, die im einzelnen mit 24a bis 24d bezeichnet werden. Die Drehkörper 24 erstrecken sich mindestens über die gesamte Breite des Ballenpreßraums 12 und gegebenenfalls darüber hinaus. Wenigstens einer der Drehkörper 24 ist antreibbar. Alle vier ortsfesten Drehkörper 24 liegen nahe einer im wesentlichen horizontalen Ebene oberhalb des Ballenpreßraums 12. Außerdem befinden sich die vorderen und der dazwischenliegenden Drehkörper 24a, 24b und 24d in vertikaler Richtung vor, und der hintere Drehkörper 24c in vertikaler Richtung hinter dem Ballenpreßraum 12 bzw. den Seitenwänden 38. Der hintere Drehkörper 24c befindet sich in dem oberen rückwärtigen Eckbereich des Fahrgestells 14 und ist ungefähr gleich weit von den Drehkörpern 32c, 32d entfernt, wenn sich der Träger 26 in einer seiner Endstellungen befindet.

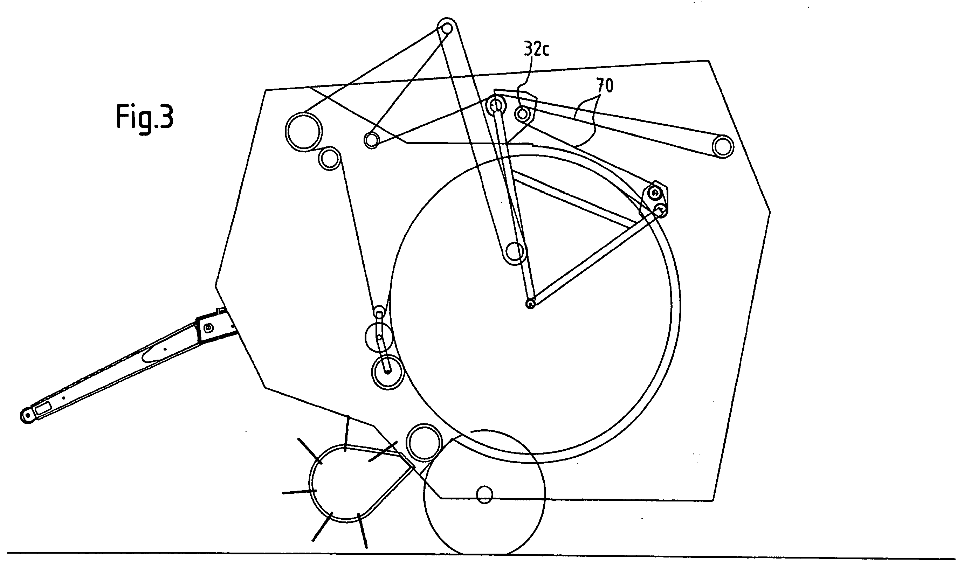

Der Träger 26 ist im wesentlichen in der Form eines Dreiecks mit einem ersten und einem zweiten Schenkel 42 und 44 ausgebildet, die mittels einer Spange 46 starr verbunden werden. Der erste und der zweite Schenkel 42 und 44 verlaufen divergierend zueinander, treffen sich jedoch in einem Lager 48, das auf einem Lagerteil 50 an der Außenseite der Seitenwand 38 aufgenommen wird. Der Lagerteil 50 befindet sich direkt im oder nahe zum Zentrum des Ballenpreßraums 12 bzw. der Seitenwand 38. Auf jeder Seite der Rundballenpresse 10 ist ein Träger 26 und ein Lagerteil 50 vorgesehen, und zwar jeweils an der Außenseite der Seitenwand 38. Am radial außenliegenden Endbereich des ersten Schenkels 42 ist ein erster und ein zweiter beweglicher Drehkörper 32a, 32b und an dem radial außenliegenden Endbereich des zweiten Schenkels 44 ist ein erster und ein zweiter beweglicher Drehkörper 32c, 32d vorgesehen, die jeweils frei drehbar von dem Träger 26 aufgenommen werden. Die ersten und die zweiten Drehkörper 32a bis 32d verlaufen parallelachsig und jeweils mit geringem Abstand zueinander. Der erste Drehkörper 32a ist direkt an dem vorderen Schenkel 42 und der zweite Drehkörper 32d ist direkt an dem zweiten Schenkel 44 angebracht, während der jeweils dazugehörige Drehkörper 32b und 32c an einem von dem jeweiligen Schenkel 42, 44 abstehenden Arm 51 angebracht ist. Der zweite Drehkörper 32b des ersten Schenkels 42 befindet sich radial weiter außen als der erste 32a. Die Verstellung des Trägers 26 erfolgt über einen nicht gezeigten Stellmotor, z. B. in der Art eines Hydraulikzylinders, eines drehenden Hydraulikmotors mit einem Getriebe, eines Elektro- oder Pneumatikmotors, oder dergleichen. Der Träger 26 kann zwischen zwei Endstellungen schwenken, nämlich einer unteren, in der sich die Drehkörper 32a bis 32d im wesentlichen nahe einer horizontalen Ebene unterhalb des Ballenpreßraums 12 befinden, und einer um nahezu 180 Grad nach oben versetzten Stellung, in der die Drehkörper 32c, 32d des zweiten Schenkels 44 zwischen dem dazwischengelegenen und dem hinteren ortsfesten Drehkörper 24d und 24c zu liegen kommen - sh. Figur 3. Die Drehkörper 32a bis 32d sind den Drehkörpern 24 vergleichbar ausgebildet und erstrecken sich ebenfalls mindestens über die Breite des Ballenpreßraums 12. Der Träger 26 kann anstatt als Fachwerk auch flächig ausgebildet werden und gleichzeitig die Seitenwand 38 bilden.

Der Spannmechanismus 28 enthält einen Spannarm 52, einen beweglichen Drehkörper 32e und ein nicht gezeigtes Spannelement. Der Spannarm 52 und das Spannelement befinden sich jeweils einmal auf jeder Seite der Rundballenpresse 10 auf der Außenseite der Seitenwände 38. Der Spannarm 52 ist im Bereich der Seitenwände 38, und zwar bei diesem Ausführungsbeispiel oberhalb und vor dem Lagerteil 50, vertikal schwenkbar in einem Lager 54 gelagert und erstreckt sich bis über die Ebene, um die die ortsfesten oberen Drehkörper 24 angeordnet sind. Der Drehkörper 32e befindet sich an dem radial außenliegenden Endbereich des Spannarms 52. Das Spannelement ist in üblicher Weise als eine mechanische Feder oder als ein Hydraulikmotor ausgebildet, der gegen einen evtl. veränderbaren Widerstand bewegbar ist. Ein solcher Widerstand kann mittels einer vorzugsweise verstellbaren Drossel in einem Hydraulikkreis aufgebaut werden, wie dies an sich bekannt ist. Das Maß des Widerstands bestimmt zugleich die Dichte und das maximale Gewicht des Ballens 36. Der Spannarm 52 ist so ausgebildet oder angeordnet, daß er nicht mit dem Träger 26 kollidiert; beispielsweise befinden sich die Spannarme 52 weiter außen als die jeweiligen Träger 26. Vorzugsweise sind die Spannarme 52 im Bereich des Drehkörpers 32e verwindungssteif miteinander verbunden und schwenken gemeinsam wie ein auf dem Kopf stehendes "U".

Der schwenkbare Träger 30 enthält einen Rahmen 56, der in seinem Mittenbereich vertikal schwenkbar um eine Schwenkachse 58 gelagert ist. An dem oberen Ende des Rahmens 56 ist ein Drehkörper 32f vorgesehen, der parallel zu einer mittleren Rolle 62 und einer unteren Rolle 64 verläuft. Der Drehkörper 32f und die Rollen 62, 64 sind frei drehbar in dem Rahmen 56 gelagert, wobei die mittlere Rolle 62 koaxial zu der Schwenkachse 58 verläuft. Der Durchmesser der Rollen 62, 64 ist größer als der des Drehkörpers 32f. Die Unterseite der unteren Rolle 64 bildet gleichzeitig die obere Begrenzung des Einlasses 40. Die Innenfläche des Drehkörpers 32f und der Rollen 62, 64 verläuft im wesentlichen auf einer Krümmung, die wiederum im wesentlichen der Außenform eines fertigen Ballens 36 folgt. Der Abstand zwischen dem Drehkörper 32f und der oberen Rolle 62 ist in diesem Ausführungsbeispiel größer als der zwischen beiden Rollen 62, 64. Es ist zwar nicht gezeigt, aber der Rahmen 56 kann mittels eines Spannelements in eine bestimmte Stellung vorgespannt werden.

Die Drehkörper 32, im einzelnen 32a - 32f, sind ortsbeweglich, wobei ihre Lage von der Spannung in dem Pressmittel 34 und der Stellung des Trägers 26 abhängt. Die auf dem Träger 26 gelagerten Drehkörper 32a bis 32d erstrecken sich wenigstens vollkommen über den Ballenpreßraum 12, so daß sie auf der Außenkante des rückwärtigen Teils der Seitenwände 38 oder mit Abstand zu dieser bewegt werden können.

Das Pressmittel 34 setzt sich in diesem Ausführungsbeispiel aus einer Vielzahl parallel zueinander verlaufender, schmaler, flacher, flexibler und endlos ausgebildeter Riemen zusammen, wie dies an sich bekannt ist. Dieses Pressmittel 34 verläuft unter anderem über die ortsfesten und die beweglichen Drehkörper 32 und wird mittels des Spannmechanismus 28 stets so fest an dem wenigstens einen drehbar angetriebenen ortsfesten Drehkörper 24 angelegt, daß seine Mitnahme gewährleistet ist. Wie die Darstellung der Figuren 1 und 3 zeigt, kann das Pressmittel 34 einen Anfangszustand einnehmen, in dem es gerade gestreckt den Einlass 40 überbrückt, und einen Endzustand, in dem es sich wie eine große Schlaufe um den Ballen 36 schlingt. Der Lauf des Pressmittels 34 ist bei einem leeren Ballenpreßraum 12 ausgehend von dem rückwärtigen Drehkörper 24c und im Uhrzeigerdrehsinn gesehen der folgende: über den ortsfesten Drehkörper 24c, unter den Drehkörper 32d, über den Drehkörper 32c, unter den Drehkörpern 32b und 32a, zwischen den Drehkörper 32f und die obere Rolle 62, über den vorderen unteren ortsfesten Drehkörper 24b, über den vorderen oberen ortsfesten Drehkörper 24a und um diesen um ca. 180 Grad herum, über und um ca. 180 Grad herum um den Drehkörper 32e auf dem Spannarm 52, über und um ca. 180 Grad herum um den dazwischenliegenden ortsfesten Drehkörper 24d zurück zu dem rückwärtigen ortsfesten Drehkörper 24c - sh. Figur 1.

Der Ballen 36 befindet sich während seiner Bildung in dem Ballenpreßraum 12 und wird von dem Pressmittel 34 größtenteils umschlungen, fällt aber aus dem Ballenpreßraum 12, d. h. dem Raum zwischen den Seitenwänden 38, auf den Boden, sobald - wie später beschrieben wird - der Träger 26 mit den beweglichen Drehkörpern 32 mit Blick auf die Zeichnung entgegen dem Uhrzeigerdrehsinn nach oben schwenkt.

Die Seitenwände 38 entsprechen in ihrer Größe und Form wenigstens im rückwärtigen Bereich im wesentlichen den Stirnflächen eines fertigen Ballens 36 in seiner größten Ausführung. Die Seitenwände 38 sind vorzugsweise aus Stahlblech gebildet, verlaufen evtl. leicht divergierend nach hinten und sind an geeigneten Stellen versteift. Die Seitenwände 38 können zudem quer zur Fahrtrichtung begrenzt beweglich gelagert sein, damit sie beim Auswerfen des Ballens 36 dessen Anlagekraft an ihrer Innenseite reduzieren, so daß dieser leichter und somit schneller austritt. Es würde z. B. bereits ausreichen, wenn die Seitenwände 38 um wenige Zentimeter voneinander entfernt würden. Dieses Merkmal kann für sich alleine ausgeführt werden und stellt eine Innovation für sich dar. Die Seitenwände 38 können mit den Trägern 26 beweglich ausgebildet werden.

Der Einlaß 40 wird oben von der Rolle 64 und unten von einer Rolle 60 begrenzt. Allerdings könnte die obere Begrenzung auch von dem um den Drehkörper 32f verlaufenden Preßmittel 34 und die untere von dem Drehkörper 32a gebildet werden. Der Einlaß 40 stellt im wesentlichen die Stelle dar, an der der Ballen 36 nicht von dem Preßmittel 34 umgeben ist.

Eine vorzugsweise angetriebene Rolle 60 ist stromabwärts der Aufnahmevorrichtung 20 und an deren unteren Bereich angrenzend vorgesehen. Vorzugsweise ist die Rolle 60 auf ihrer Umfangsfläche mit nicht näher bezeichneten Mitnehmern versehen, die einen sicheren Transport des Ernteguts zwischen der Aufnahmevorrichtung 20 und dem Ballenpreßraum 12 gewährleisten.

Diese Rolle 60 bildet die der unteren Rolle 64 gegenüberliegende, untere Begrenzung des Einlasses 40 und befindet sich in unmittelbarer Nachbarschaft zu dem ersten, vorderen Drehkörper 32a an dem ersten Schenkel 42, wenn sich der Träger 26 in seiner unteren, vorderen Endstellung befindet.

Nach alledem gibt sich folgender Aufbau und Funktion der erfindungsgemäßen Rundballenpresse 10 aus der vorherigen Beschreibung.

Solange der Rundballenpresse 10 kein Gut zugeführt wird und der Ballenpreßraum 12 leer ist, befindet sich der Träger 26 in seiner unteren, vorderen Endstellung, in der sich der erste, vordere Drehkörper 32a an dem ersten Schenkel 42 nahe der Rolle 60 befindet und sich die Drehkörper 32a - 32d nahe einer im wesentlichen horizontalen Ebene befinden. Der Spannarm 52 wird oben nach hinten gedrängt, sodaß er eine unter ca. 45 Grad verlaufende Neigung zur Vertikalen einnimmt und sich sein Drehkörper 32e nahe dem rückwärtigen oberen ortsfesten Drehkörper 24c befindet. Der schwenkbare Träger 30 nimmt seine im Uhrzeigerdrehsinn weitest mögliche Endstellung ein. Das Pressmittel 34 bildet zwischen dem vorderen oberen Drehkörper 24 und dem dazwischenliegenden Drehkörper 24d eine erste Schlaufe 66 um den Drehkörper 32e am Ende des Spannarms 52. Eine zweite große Schlaufe 68 wird gebildet zwischen dem Drehkörper 32e am Ende des Spannarms 52 und dem rückwärtigen, ortsfesten Drehkörper 24c über den dazwischenliegenden Drehkörper 24d. In diesem Bereich befinden sich folglich drei Trume mehr oder weniger parallel zueinander oberhalb des Ballenpreßraums 12. Schließlich erstreckt sich ein Abschnitt des Pressmittels 34 über die Innenseiten der Rollen 60 und 64 und verschließt somit den Einlass 40. Dieser Zustand entspricht dem in Figur 1 gezeigten.

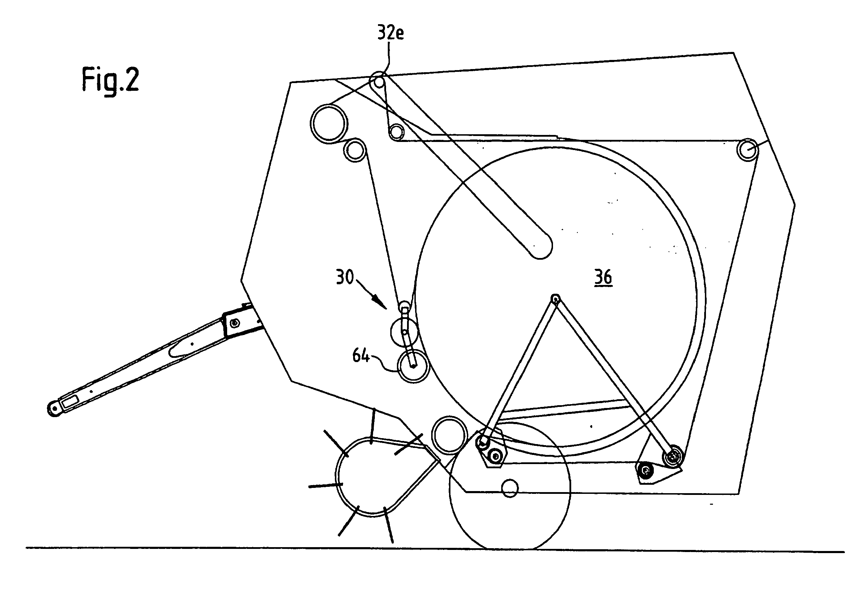

Sobald über die Aufnahmevorrichtung 20 Erntegut zu dem Ballenpreßraum 12 gefördert wird, wird es den Abschnitt des Pressmittels 34 zu dem Innern des Ballenpreßraums 12 hin auslenken, was bewirkt, daß der Spannarm 52 anfängt, sich nach vorne zu bewegen, um die erste große und obere Schlaufe 66 zu verkürzen. Ab einem bestimmten Durchmesser wird der Ballen 36 an dem Drehkörper 32f anliegen und mit ihm den schwenkbaren Träger 30 entgegen dem Uhrzeigerdrehsinn schwenken. Dabei wird sich die untere Rolle 64 in den Ballenpreßraum 12 hinein und den Ballen 36 von dem Einlass 40 weg bewegen, so daß ankommendes Erntegut leicht angenommen werden kann. Mit zunehmendem Durchmesser bewegt sich der Spannarm 52 weiter nach vorne, bis er schließlich seine Endstellung einnimmt. Während der Ballendurchmesser zunimmt, bleibt der Träger 26 in seiner in den Figuren 1 und 2 gezeigten Stellung.

Wenn der Ballen 36 seinen größten Durchmesser erreicht hat-sh. Figur 3 - hat der schwenkbare Träger 30 seine maximale Stellung entgegen dem Uhrzeigerdrehsinn und der Spannarm 52 seine vorderste Stellung eingenommen, in der die erste Schlaufe 66 ihre geringste Länge einnimmt. Der Ballen 36 ruht vorne auf der Rolle 60 und dem angrenzenden ersten Drehkörper 32a. Im übrigen wird der Ballen 36 von der Spannung in dem Pressmittel 34 außer Kontakt mit dem ersten und dem zweiten Drehkörper 32c, 32d und den über sie verlaufenden Riemenabschnitten gehalten. Bei Bedarf kann zwischen den beiden zweiten Schenkeln 44 eine weitere nicht gezeigte Rolle vorgesehen werden, auf der sich der Ballen 36 abstützt. Wenn der Ballen 36 seine maximale Größe erreicht hat, wird aufgrund des radialen Versatzes des ersten und des zweiten Drehkörpers 32a und 32b an dem ersten Schenkel 42 verhindert, daß die einander benachbarten Trume des Pressmittels 34 aneinander anliegen. In diesem Zustand kann der Ballen 36 gebunden oder mit Folie oder Netz umwickelt werden, so daß er nach dem Austritt aus dem Ballenpreßraum 12 nicht auseinander fällt.

Nachdem der Ballen 36 vollkommen gebildet ist, kann er aus dem Ballenpreßraum 12 ausgeworfen werden, wozu der Träger 26 entgegen dem Uhrzeigerdrehsinn nach hinten und oben geschwenkt wird. Insbesondere aufgrund der Anlenkung des Trägers 26 im oder nahe dem Zentrum der Seitenwände 38 wird der Ballen 36 bereits nach einem kurzen Schwenkweg des Trägers 26 von z. B. ca. 90 Grad auf den Boden fallen. Nach einem Schwenkweg von z.B. ca. 180 Grad befindet sich der erste Drehkörper 32a an dem ersten Schenkel 42 soweit über dem Boden, daß die Rundballenpresse 10 weiter nach vorne gefahren werden kann, ohne an den Ballen 36 anzustoßen. Wenn sich der Träger 26 in seiner oberen Endlage befindet, bildet das Pressmittel 34 eine dritte Schlaufe 70 um den Drehkörper 32c und den ortsfesten Drehkörper 24f, so daß der zuvor um den Ballen 36 geschlungene Abschnitt des Pressmittels 34 von dieser dritten Schlaufe 70 aufgenommen und das Pressmittel 34 gespannt gehalten wird. In dieser Situation befinden sich der erste und der zweite Drehkörper 32a, 32b zwischen dem dazwischenliegenden Drehkörper 24d vorne und dem rückwärtigen Drehkörper 24c.

Sobald der Ballen 36 aus dem Ballenpreßraum 12 herausgerollt ist, wird der Träger 26 wieder nach unten in die in Figur 1 gezeigte Stellung geschwenkt. Auf diesem Weg wird das Pressmittel 34 wieder gespannt und somit der Spannarm 52 wieder nach hinten bewegt.

## Patentansprüche

1. Rundballenpresse (10) mit wenigstens einem flexiblen endlosen Pressmittel (34), das über ortsfeste und bewegliche Drehkörper (24, 32) geführt ist und einen Ballenpreßraum (12) umfangsseitig im wesentlichen umgibt, mit:
a) einem vertikal schwenkbaren Träger (26) mit einem Drehkörper (32a) einerseits und zwei Drehkörpern (32c, 32d) andererseits,
b) ortsfest gelagerten, oberen vorderen und rückwärtigen Drehkörpern (24a, 24c),
c) einem Spannmechanismus (28) mit wenigstens einem Drehkörper (32e)
**dadurch gekennzeichnet, daß**
ein Trum des Pressmittels (34) durch einen Spalt zwischen den beiden Drehkörpern (32c, 32d) andererseits verläuft und infolge einer Änderung der Stellung des Trägers (26) an einen der Drehkörper (32c) zur Mitnahme anlegbar ist.

2. Rundballenpresse nach Anspruch 1, **dadurch gekennzeichnet, daß** der Träger (26) um eine der Mittenachse des Ballenpreßraums (12) benachbarte oder mit dieser zusammenfallende gedachte oder tatsächliche Achse schwenkbar ist.

3. Rundballenpresse nach Anspruch 1 oder 2, **dadurch gekennzeichnet, daß** mehrere, insbesondere drei, feste Drehkörper (24a, 24c, 24d) oberhalb des Ballenpreßraums (12) angeordnet sind und die zwei Drehkörper (32c, 32d) andererseits in den Bereich zwischen zwei festen Drehkörpern (24) schwenkbar sind.

4. Rundballenpresse nach einem oder mehreren der vorherigen Ansprüche, **dadurch gekennzeichnet, daß** der Spannmechanismus (28) einen gegen eine Kraft schwenkbaren Spannarm (52) mit dem Drehkörper (32e) enthält, der in einem oberen Bereich der Rundballenpresse (10) zwischen den festen Drehkörpern (24) beweglich ist.

5. Rundballenpresse nach einem oder mehreren der vorherigen Ansprüche, **dadurch gekennzeichnet, daß** dem einen Drehkörper (32a) einerseits ein weiterer Drehkörper (32b) benachbart ist, der gegenüber dem Schwenkpunkt des Trägers (26) radial versetzt ist.

6. Rundballenpresse nach einem oder mehreren der vorherigen Ansprüche, **dadurch gekennzeichnet, daß** der Träger (26) in der Form eines Dreiecks ausgebildet ist, in dessen einem Winkelbereich er außerhalb von den Ballenpreßraum (12) begrenzenden Seitenwänden (38) schwenkbar gelagert ist.

7. Rundballenpresse nach einem oder mehreren der Ansprüche 1-5 **dadurch gekennzeichnet, daß** der Träger (26) gleichzeitig als Seitenwand (38) ausgebildet ist.

8. Rundballenpresse nach einem oder mehreren der vorherigen Ansprüche, **dadurch gekennzeichnet, daß** auf der anderen Seite des Einlasses (40) ein schwenkbarer Träger (30) vorgesehen ist, um dessen exzentrisch zu und oberhalb der Schwenkachse (58) vorgesehenen Drehkörper (32f) das Pressmittel (34) geführt ist.

9. Rundballenpresse nach einem oder mehreren der vorherigen Ansprüche, **dadurch gekennzeichnet, daß** ein ortsfester Drehkörper (24c) in beiden Endstellungen des Trägers (26) im wesentlichen die gleiche Entfernung zu den Drehkörpern (32c, 32d) andererseits aufweist.

10. Rundballenpresse nach einem oder mehreren der vorherigen Ansprüche, **dadurch gekennzeichnet, daß** die Seitenwände (38) gegenüber einem Fahrgestell (14) der Rundballenpresse verstellbar sind.

11. Rundballenpresse nach einem oder mehreren der vorherigen Ansprüche, **dadurch gekennzeichnet, daß** sich die Drehkörper (32a) bis (32d) des Trägers (26) außerhalb des Ballenpreßraums (12) erstrecken.

## Claims

1. A round baler (10) with at least one flexible, endless compacting means (34) which is guided over positionally fixed and movable rotary bodies (24, 32) and substantially surrounds a bale compaction chamber (12) peripherally, with:
a) a vertically pivoting carrier (26) with a rotary body (32a) on the one side and two rotary bodies (32c, 32d) on the other side,
b) positionally fixed upper front and rear rotary bodies (24a, 24c),
c) a tensioning mechanism (28) with at least one rotary body (32e),
**characterized in that** one run of the compacting means (34) runs through a gap between the two rotary bodies (32c, 32d) on the other side and can be applied to one of the rotary bodies (32c) to be entrained as a result of a change in the position of the carrier (26).

2. A round baler according to claim 1, **characterized in that** the carrier (26) can pivot about a conceptual or actual axis adjacent to or coinciding with the central axis of the bale compaction chamber (12).

3. A round baler according to claim 1 or 2, **characterized in that** a plurality, especially three, fixed rotary bodies (24a, 24c, 24d) are arranged above the bale compaction chamber (12) and the two rotary bodies (32c, 32d) on the other side can pivot in the region between two fixed rotary bodies (24).

4. A round baler according to one or more of the preceding claims, **characterized in that** the tensioning mechanism (28) includes a tensioning arm (52) with the rotary body (32e), which arm can pivot against a force and which rotary body is movable in an upper region of the round baler (10) between the fixed rotary bodies (24).

5. A round baler according to one or more of the preceding claims, **characterized in that** a further rotary body (32b) is adjacent the one rotary body (32a) on the one side and is radially offset relative to the centre of gravity of the carrier (26).

6. A round baler according to one or more of the preceding claims, **characterized in that** the carrier (26) is in the form of a triangle in one of whose corner regions it is pivotally mounted outside of sidewalls (38) delimiting the bale compaction chamber (12).

7. A round baler according to one or more of claims 1 - 5, **characterized in that** the carrier (26) is formed simultaneously as a sidewall (38)

8. A round baler according to one or more of the preceding claims, **characterized in that** a pivoted carrier (30) is provided on the other side of the inlet (40) around whose rotary body (32f) provided eccentrically above the pivot axis (58) the compacting means (34) is guided.

9. A round baler according to one or more of the preceding claims, **characterized in that** a positionally fixed rotary body (24c) has substantially the same distance from the rotary bodies (32c, 32d) on the other side in both end positions of the carrier (26).

10. A round baler according to one or more of the preceding claims, **characterized in that** the sidewalls (38) can be adjusted relative to a chassis (14) of the round baler.

11. A round baler according to one or more of the preceding claims, **characterized in that** the rotary bodies (32a) to (32d) of the carrier (26) extend outside the bale compaction chamber (12).

## Revendications

1. Presse à balles cylindriques (10) comportant au moins un moyen de pression (34) continu flexible, qui est guidé sur des corps de rotation (24, 32), localement fixes et mobiles, et délimite sensiblement sur le pourtour une chambre de formage de la balle (12), comportant :
a) un support (26) pouvant pivoter verticalement, avec un corps de rotation (32a) sur un coté et deux corps de rotation (32c, 32d) sur l'autre côté,
b) des corps de rotation supérieurs (24a, 24c) avant et arrière, montés localement fixes,
c) un mécanisme de tension (28) avec au moins un corps de rotation (32e),
**caractérisée en ce qu'**un brin du moyen de pression (34) passe à travers une fente entre les deux corps de rotation (32c, 32d) de l'autre côté et, sous l'effet d'une variation de la position du support (26), peut être amené en appui contre un des corps de rotation (32c) en vue d'être entraîné.

2. Presse à balles cylindriques selon la revendication 1, **caractérisée en ce que** le support (26) est apte à pivoter autour d'un axe imaginaire ou réel, adjacent à l'axe médian de la chambre de formage de la balle (12) ou coïncidant avec celui-ci.

3. Presse à balles cylindriques selon la revendication 1 ou 2, **caractérisée en ce que** plusieurs, en particulier trois, corps de rotation (24a, 24c, 24d) fixes sont agencés au-dessus de la chambre de formage de la balle (12) et les deux corps de rotation (32c, 32d) de l'autre côté peuvent pivoter dans la zone entre deux corps de rotation (24) fixes.

4. Presse à balles cylindriques selon une ou plusieurs des revendications précédentes, **caractérisée en ce que** le mécanisme de tension (28) comporte un bras de tension (52), qui est muni du corps de rotation (32e) et qui est apte à pivoter à l'encontre d'une force et est mobile dans une zone supérieure de la presse à balles cylindriques (10) entre les deux corps de rotation (24) fixes.

5. Presse à balles cylindriques selon une ou plusieurs des revendications précédentes, **caractérisée en ce qu'**un corps de rotation (32b) supplémentaire, qui est décalé dans le sens radial par rapport au centre de pivotement du support (26), est adjacent au corps de rotation (32a) de l'un des côtés.

6. Presse à balles cylindriques selon une ou plusieurs des revendications précédentes, **caractérisée en ce que** le support (26) est réalisé sous la forme d'un triangle, dans l'une des zones d'angle duquel ledit support est monté pivotant en dehors des parois latérales (38) délimitant la chambre de formage de la balle (12).

7. Presse à balles cylindriques selon une ou plusieurs des revendications 1 à 5, **caractérisée en ce que** le support (26) est réalisé en même temps sous forme de paroi latérale (38).

8. Presse à balles cylindriques selon une ou plusieurs des revendications précédentes, **caractérisée en ce que** sur l'autre côté de la zone d'admission (40) il est prévu un support pivotant (30), qui comporte un corps de rotation (32f), qui est prévu excentré par rapport à l'axe de pivotement (58) et au-dessus de celui-ci, et autour duquel est guidé le moyen de pression (34).

9. Presse à balles cylindriques selon une ou plusieurs des revendications précédentes, **caractérisée en ce qu'**un corps de rotation (24c) localement fixe présente, dans les deux positions finales du support (26), sensiblement la même distance par rapport aux corps de rotation (32c, 32d) de l'autre côté.

10. Presse à balles cylindriques selon une ou plusieurs des revendications précédentes, **caractérisée en ce que** les parois latérales (38) sont réglables par rapport à un châssis de roulement (14) de la presse à balles cylindriques (10).

11. Presse à balles cylindriques selon une ou plusieurs des revendications précédentes, **caractérisée en ce que** les corps de rotation (32a) à (32d) du support (26) s'étendent en dehors de la chambre de formage de la balle (12).
